# FASCICULE DE BREVET EUROPEEN

(11) **EP 0 872 652 B1**
(45) Date de publication et mention de la délivrance du brevet: **08.09.2004**
(21) Numéro de dépôt: 98400808.6
(22) Date de dépôt: 06.04.1998
(51) Int. Cl.: F16C 19/52

(54) **Palier à roulement à capteur d'informations**
Wälzlager mit Messwertenaufnehmer
Rolling contact bearing with informations sensor

(30) Priorité: 15.04.1997 FR 9704621
(43) Date de publication de la demande: 21.10.1998
(73) Titulaire: SKF FRANCE, F-92142 Clamart Cédex (FR)
(72) Inventeur: Message, Olivier, 37000 Tours (FR); Landrieve, Franck, 37230 Fondettes (FR)
(74) Mandataire: Casalonga, Axel

(56) Documents cités:
- EP-A- 0 039 968
- EP-A- 0 394 083
- EP-A- 0 767 385
- WO-A-87/00290
- US-A- 4 037 690
- US-A- 5 296 805

## Description

La présente invention concerne le domaine des paliers à roulement à capteur d'informations utilisés, par exemple, dans des moteurs électriques, des robots ou divers organes tournants de véhicules automobiles.

Ces paliers à roulement à capteur d'informations possèdent en général une bague fixe et une bague tournante, une ou plusieurs rangées d'éléments roulants en contact avec des chemins de roulement aménagés sur lesdites bagues, un ensemble capteur solidarisé à la bague fixe et un moyen codeur solidarisé à la bague tournante et défilant à rotation devant le capteur avec un entrefer. Ces paliers à roulement permettent de connaître avec précision les paramètres de déplacement angulaire d'un élément mécanique : vitesse, position angulaire, etc.

De tels paliers à roulement sont connus en soi, mais présentent parfois certains inconvénients. C'est ainsi que la fixation et/ou le positionnement du bloc capteur sur la bague non tournante du roulement nécessitent souvent des usinages spéciaux sur ladite bague, tels que rainure d'accrochage, ou portée rectifiée de centrage du bloc capteur. De tels usinages interdisent l'utilisation de paliers à roulement standards pour la réalisation de certaines dimensions de paliers à roulement instrumentés à capteur d'informations. Par ailleurs, l'étanchéité entre l'ensemble capteur et la bague non tournante n'est pas toujours aisément réalisable.

Enfin, certains dispositifs de l'art antérieur présentent un encombrement relativement important.

Du document EP 0 767 385 A est connu d'une part en variante des figures 1 et 5, un palier à roulement comprenant une bague stationnaire, une bague tournante, deux rangées d'éléments roulants, une bague d'impulsion tournante fixée à la bague tournante et un capteur fixé à la bague stationnaire et disposé en face de la bague d'impulsion. Le capteur de type conventionnel est incorporé dans une tête de support de capteur couplé à un siège correspondant faisant bloc avec la bague stationnaire. Le siège peut consister en un appendice orienté dans une direction qui est substantiellement axiale ou légèrement inclinée par rapport à une direction axiale, par exemple sous la forme d'un anneau métallique ouvert.

Par ailleurs, ce document décrit en variante des figures 3, 7 et 8, un palier à roulement dans lequel l'appendice est soudé sur la périphérie de la bague extérieure.

La présente invention a pour objet de remédier aux inconvénients de l'art antérieure et de proposer un palier à roulement compact de fabrication économique, dont l'étanchéité est assurée et garantissant une valeur d'entrefer précise entre capteur et codeur et donc un signal fiable.

Le palier à roulement, selon la présente invention, comprend une bague fixe, une bague tournante, au moins une rangée d'éléments roulants disposés entre la bague fixe et la bague tournante, un moyen codeur solidaire de la bague tournante et concentrique à celle-ci, et un moyen capteur supporté par un bloc porte-capteur solidaire de la bague fixe et disposé en regard et avec un faible entrefer par rapport au moyen codeur dont le défilement lors de la rotation est détecté par le moyen capteur. Le bloc porte-capteur est solidarisé à la bague fixe au moyen d'un organe de maintien métallique positionné par rapport à la bague fixe. L'organe de maintien est positionné sur une face radiale de la bague fixe du palier à roulement, soudé sur celle-ci, et disposé radialement en retrait par rapport à la périphérie de la bague extérieure et à l'alésage de la bague intérieure.

Ainsi, l'étanchéité entre le bloc porte-capteur et la bague fixe est excellente. Le positionnement de l'organe de maintien par rapport à la bague fixe garantit que le moyen capteur est disposé convenablement par rapport au moyen codeur, la fixation par soudure de l'organe de maintien sur la bague fixe garantissant en outre le maintien permanent et fiable de ce positionnement. On évite l'usinage d'une surface supplémentaire, la face latérale de la bague fixe étant généralement radiale. De plus on évite un accroissement de l'encombrement radial du palier à roulement.

Dans un mode de réalisation de l'invention, l'organe de maintien est soudé sur la bague extérieure du palier à roulement. Il peut alors être positionné par rapport à la périphérie de la bague extérieure du palier à roulement, on obtient alors une position relative précise entre le moyen capteur et le moyen codeur car il existe, par construction, une très bonne concentricité entre la périphérie de la bague extérieure et la périphérie de la bague intérieure du palier à roulement. Le codeur peut être emmanché sur la périphérie de la bague intérieure.

Dans un autre mode de réalisation de l'invention; l'organe de maintien est soudé sur la bague intérieure du palier à roulement. Il peut être positionné par rapport à l'alésage de la bague intérieure du palier à roulement.

Dans un mode de réalisation de l'invention, l'organe de maintien a une forme annulaire.

Dans un autre mode de réalisation, l'organe de maintien a la forme d'un secteur angulaire. On obtient alors un palier à roulement d'encombrement réduit, l'organe de maintien et le bloc porte-capteur n'occupant qu'un secteur faible du pourtour du palier à roulement.

L'organe de maintien peut être soudé par faisceau d'électrons ou par faisceau laser.

L'invention permet d'utiliser et d'équiper, dans une grande plage de dimensions, un palier à roulement comportant des éléments standards avec un ensemble capteur et un codeur, et ce, sans usinage spécial et donc à faible coût. L'organe de maintien contenant le bloc porte-capteur est positionné par rapport à une surface de référence du palier à roulement pendant l'opération de soudure, ce qui garantit ensuite le maintien permanent d'une bonne position relative entre le capteur et le codeur. La rigidité de la liaison par soudure garantit, même en cas de choc, le maintien des positions relatives de ces pièces puisque le bloc porte-capteur est positionné sans jeu à l'intérieur de l'organe de maintien. Enfin, le palier à roulement suivant l'invention est particulièrement compact.

L'invention sera mieux comprise à l'étude de la description détaillée de quelques modes de réalisation pris à titre d'exemples nullement limitatifs et illustrés par les dessins annexés, sur lesquels :
la figure 1 est une vue de face d'un palier à roulement selon l'invention;
la figure 2 est une vue en coupe axiale du palier à roulement de la figure 1;
la figure 3 est une vue de détail de la figure 2;
la figure 4 est une vue de détail en coupe axiale d'un palier à roulement selon un autre mode de réalisation de l'invention;
la figure 5 est une vue partielle de face en élévation d'un mode de réalisation de l'invention; et
la figure 6 est une vue de détail en coupe axiale d'un autre mode de réalisation de l'invention.

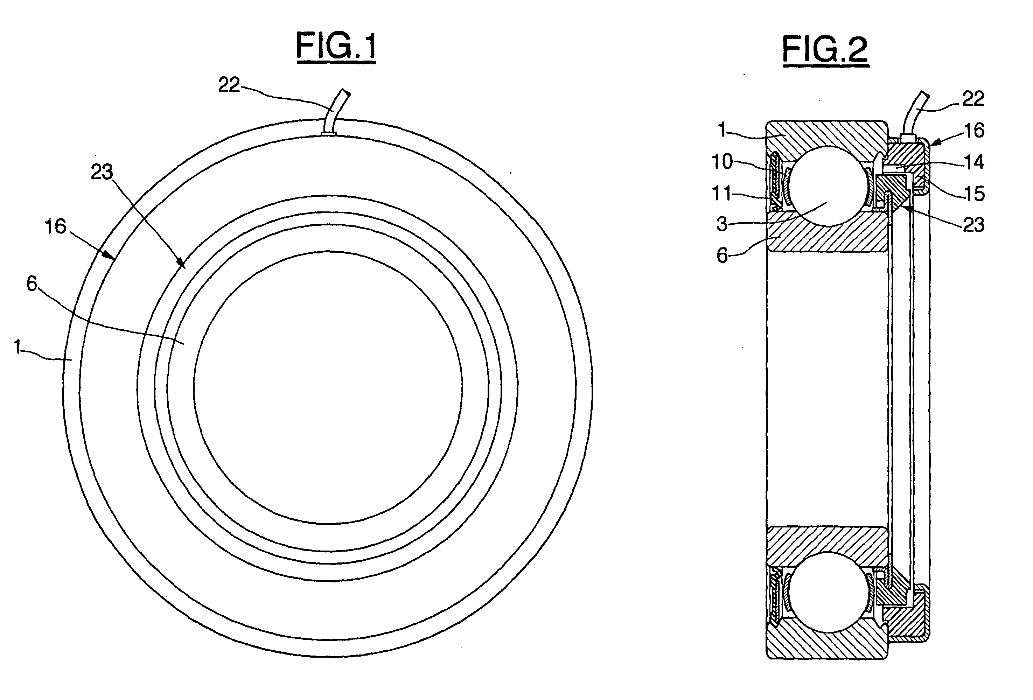

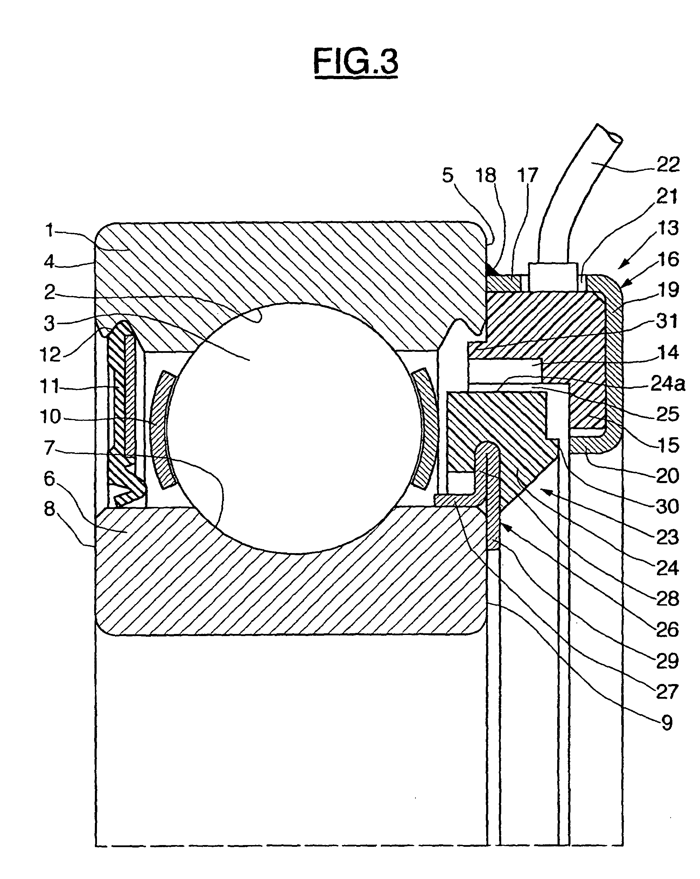

Comme on peut le voir sur les figures 1 à 3, le palier à roulement comprend une bague extérieure 1 comprenant sur son alésage un chemin de roulement 2 pour des éléments roulants 3, par exemple des billes, et deux faces radiales latérales 4 et 5. Le palier à roulement comprend également une bague intérieure 6 pourvue d'un chemin de roulement 7 pour les éléments roulants 3 et de deux faces radiales latérales 8 et 9. Les éléments roulants 3 sont maintenus circonférentiellement espacés par une cage 10. Un joint d'étanchéité 11 est prévu sur un des côtés du palier à roulement et solidarisé à la bague extérieure 1 au moyen d'une rainure 12 disposée axialement entre le chemin de roulement 2 et la face latérale 4.

Du côté des faces latérales 5 et 9 des bagues extérieure 1 et intérieure 6, le palier à roulement est pourvu d'un ensemble capteur 13 comprenant un capteur 14, par exemple une sonde à effet Hall, disposé radialement entre l'alésage de la bague extérieure 1 et la périphérie de la bague intérieure 6, un bloc porte-capteur 15 réalisé en matériau synthétique, et un organe de maintien 16 entourant sur trois côtés le bloc porte-capteur 15. L'organe de maintien 16 est réalisé en tôle métallique et se présente sous la forme d'un boîtier comprenant une portion cylindrique 17 dont une extrémité est en contact avec la face latérale 5 de la bague extérieure 1 et est solidarisée à cette dernière par un cordon de soudure 18, une portion radiale 19 disposée à l'autre extrémité de la portion cylindrique 17 et s'étendant vers l'intérieur et un rebord cylindrique 20 prévu à l'extrémité intérieure de la portion cylindrique 19. Une ouverture radiale 21 est prévue dans la portion cylindrique 17 pour le passage d'un câble 22 permettant de communiquer à un dispositif électronique non représenté les informations détectées par le capteur 14.

Le bloc porte-capteur 15 est en contact avec la face latérale 5 de la bague extérieure 1, la partie cylindrique 17 et la partie radiale 19 de l'organe de maintien 16, de façon à être maintenu sans jeu dans l'espace ainsi défini. A proximité du capteur 14, le bloc porte-capteur 15 est pourvu d'une protubérance axiale 31 en saillie vers les éléments roulants 3 entre les deux bagues 1 et 6. Cette protubérance 31 permet de supporter convenablement le capteur 14 lui-même partiellement disposé dans l'espace défini par les deux bagues 1 et 6, les éléments roulants 3 et le plan des faces latérales 5 et 9 des bagues 1 et 6. On réduit ainsi l'encombrement axial du palier à roulement instrumenté.

Un codeur 23, constitué par exemple d'une bague magnétisée multipolaire, est monté sur la périphérie de la bague intérieure 6 en regard du capteur 14 et avec un faible entrefer 25 radial. Le codeur 23 comprend une partie active 24 pourvue d'une surface cylindrique extérieure 24a face au capteur 14, et d'un élément de support 26 réalisé en tôle métallique et comprenant une partie cylindrique d'emmanchement 27, une première partie radiale 28 et une deuxième partie radiale 29 repliée sur la première partie radiale 28 et en contact avec la face latérale 9 de la bague intérieure 6 formant ainsi une butée d'emmanchement. La partie active 24 est surmoulée sur les deux parties radiales 28 et 29.

La partie active 24 comprend également une protubérance axiale 30 s'étendant en direction de l'extrémité libre du rebord cylindrique 20 de l'organe de maintien 16 pour former un passage étroit empêchant l'intrusion d'éléments extérieurs à proximité du capteur 14 et de la surface cylindrique extérieure 24a de la partie active 24.

Lors de la fabrication, l'organe de maintien 16 est mis en contact avec la face latérale 5 de la bague extérieure 1 et est prépositionné par rapport à une surface de référence, ici la périphérie de la bague extérieure 1, afin d'obtenir une position relative précise par rapport au codeur 23 qui est lui-même emmanché sur la périphérie de la bague intérieure 6. L'organe de maintien 16 est ensuite soudé par faisceau d'électrons ou par faisceau laser à la bague extérieure 1. Le cordon de soudure 18 est prévu le long de la zone de jonction entre la bague extérieure 1 et l'organe de maintien 16, de façon à assurer une étanchéité parfaite sur tout le tour de l'organe de maintien 16.

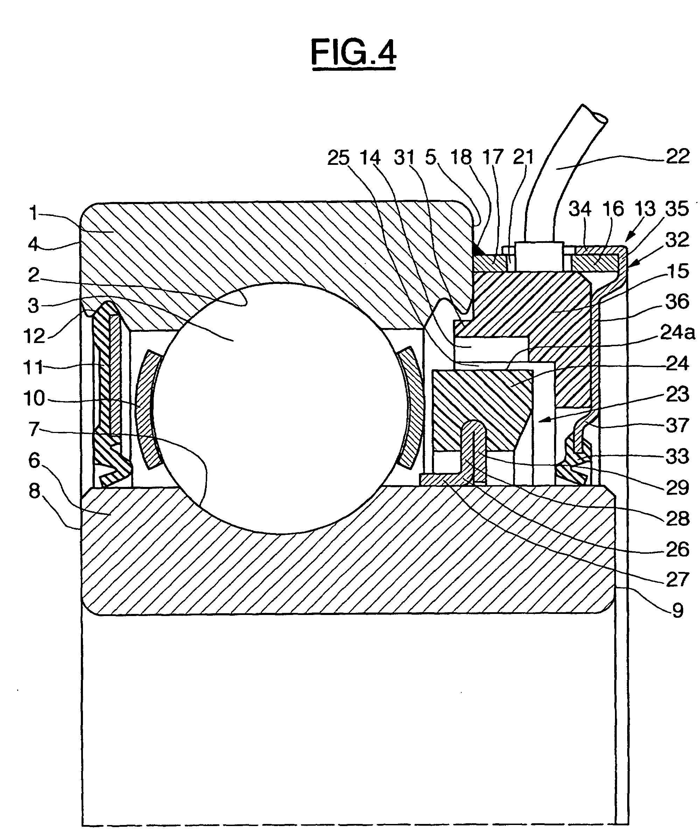

Le mode de réalisation illustré sur la figure 4 est semblable à celui des figures précédentes, à ceci près que la bague intérieure 6 a été élargie du côté du codeur 23. L'organe de maintien 16 comprend uniquement la portion cylindrique 17, et une armature métallique 32 est prévue pour supporter un joint d'étanchéité 33 en contact frottant avec une portée de la périphérie de la bague intérieure 6. L'armature métallique 32 comprend une portion cylindrique 34 emmanchée autour de l'organe de maintien 16, une portion de raccord 35 dirigée radialement vers l'intérieur, une portion radiale 36 disposée dans le prolongement de la portion de raccord 35 et en contact avec le bloc porte-capteur 15, et une extrémité libre 37 s'étendant radialement vers l'intérieur et sur laquelle est surmoulé le joint d'étanchéité 33. L'ensemble capteur 14, bloc porte-capteur 15 et codeur 23 est ainsi enfermé de façon étanche et est bien protégé contre les pollutions extérieures. Un tel palier à roulement est adapté au travail dans des conditions sévères de pollution.

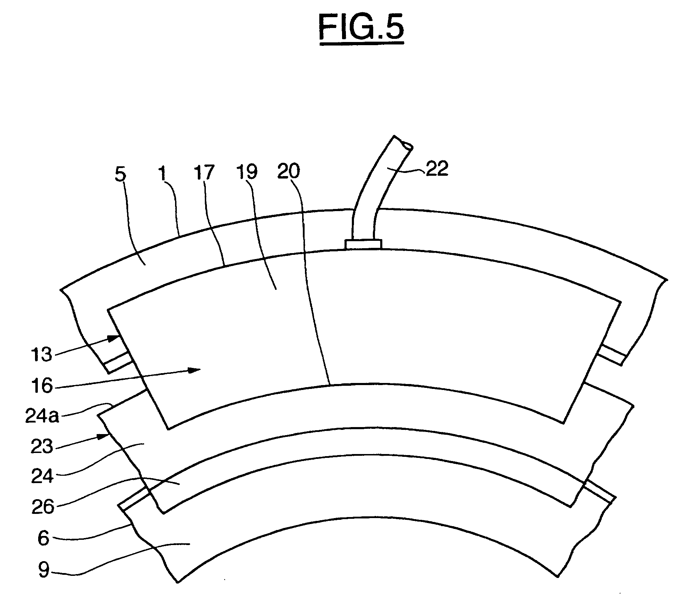

Sur la figure 5, est illustré un mode de réalisation pouvant être utilisé lorsque les conditions de fonctionnement ne nécessitent pas d'étanchéité du côté du palier à roulement où se trouve l'ensemble capteur 13. Dans ce cas, l'organe de maintien 16, au lieu d'avoir une forme annulaire continue comme sur les figures 1 à 3, peut se limiter à un secteur formant un boîtier soudé sur la bague extérieure 1. Ce mode de réalisation permet l'utilisation d'un ensemble capteur 13 de forme non annulaire, ce qui peut présenter un intérêt lorsque les critères de poids ou d'encombrement sont prépondérants.

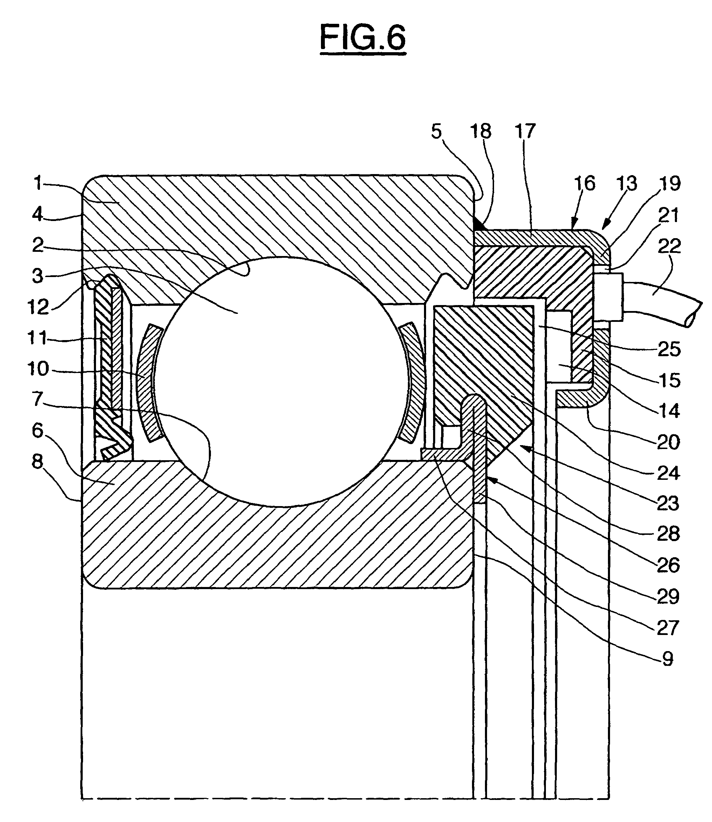

Le mode de réalisation de la figure 6 est semblable à celui des figures 1 à 3, à ceci près que l'ouverture 21 laissant passer le câble 22 est prévue dans la portion radiale 19 de l'organe de maintien 16 formant boîtier. L'entrefer 25 est ici axial, c'est-à-dire que le capteur 14 est disposé axialement par rapport au codeur 23. Le bon fonctionnement de ce palier à roulement instrumenté nécessite que le capteur 14 soit positionné précisément par rapport à la face latérale 5 de la bague extérieure 1, pour le respect de la valeur de l'entrefer entre le capteur 14 et le codeur 23. La précision du positionnement axial du codeur 23 sur la bague intérieure 6 est également importante. Cette précision est obtenue grâce à la portion cylindrique 29 qui vient en butée contre la face latérale 9 de la bague intérieure 6. Comme les faces latérales 5 et 9 sont de toute façon usinées par rectification, le positionnement des deux bagues par rapport à ces faces 5 et 9 n'engendre aucun surcoût.

Dans tous les modes de réalisation, les composants du roulement sont standards, ce qui permet une réduction des coûts de fabrication. La fixation de l'organe de maintien sur la bague fixe ne nécessite aucun usinage spécifique. Bien entendu, on peut prévoir une bague intérieure fixe et une bague extérieure tournante.

Grâce à l'invention, on dispose d'un palier à roulement instrumenté compact, fabriqué à faible coût, à étanchéité améliorée, résistant aux chocs et pouvant recevoir un ensemble capteur non annulaire de poids et d'encombrement très faibles.

On appréciera également que le fait que le capteur soit radialement en retrait par rapport à la périphérie de la bague extérieure et à l'alésage de la bague intérieure, permet le montage du roulement instrumenté sur un arbre et dans un logement de mêmes dimensions radiales que pour le roulement seul et en bénéficiant des mêmes portées de contact.

## Revendications

1. Palier à roulement comprenant une bague fixe (1), une bague tournante (6), au moins une rangée d'éléments roulants (3) disposés entre la bague fixe et la bague tournante, un moyen codeur solidaire (23) de la bague tournante et concentrique à celle-ci et un moyen capteur (14) supporté par un bloc porte-capteur (15) solidaire de la bague fixe et disposé en regard et avec un faible entrefer par rapport au moyen codeur dont le défilement lors de la rotation est détecté par le moyen capteur, dans lequel le bloc porte-capteur est solidarisé à la bague fixe au moyen d'un organe de maintien (16) métallique positionné par rapport à la bague fixe et l'organe de maintien est positionné sur une face radiale (5) de la bague fixe du palier à roulement, et disposé radialement en retrait à l'alésage de la bague intérieure, **caractérisé par le fait que** l'organe de maintien est soudé sur ladite face radiale et disposé radialement en retrait par rapport à la périphérie de la bague extérieure.

2. Palier à roulement selon la revendication 1, **caractérisé par le fait que** l'organe de maintien est soudé sur la bague extérieure du palier à roulement.

3. Palier à roulement selon la revendication 2, **caractérisé par le fait que** l'organe de maintien est positionné par rapport à la périphérie de la bague extérieure du palier à roulement.

4. Palier à roulement selon la revendication 1, **caractérisé par le fait que** l'organe de maintien est soudé sur la bague intérieure du palier à roulement.

5. Palier à roulement selon la revendication 4, **caractérisé par le fait que** l'organe de maintien est positionné par rapport à l'alésage de la bague intérieure du palier à roulement

6. Palier à roulement selon l'une quelconque des revendications précédentes, **caractérisé par le fait que** l'organe de maintien a une forme annulaire.

7. Palier à roulement selon l'une quelconque des revendications 1 à 5, **caractérisé par le fait que** l'organe de maintien a la forme d'un secteur angulaire.

8. Palier à roulement selon l'une quelconque des revendications précédentes, **caractérisé par le fait que** l'organe de maintien est soudé par faisceau d'électrons.

9. Palier à roulement selon l'une quelconque des revendications 1 à 7, **caractérisé par le fait que** l'organe de maintien est soudé par faisceau laser.

## Patentansprüche

1. Wälzlager mit einem stillstehendem Ring (1), einem umlaufenden Ring (6), wenigstens einer Reihe von Wälzkörpern (3), die zwischen dem stillstehenden Ring und dem umlaufenden Ring angeordnet sind, einem Signalgebermittel (23), das mit dem umlaufenden Ring fest verbunden und konzentrisch zu diesem angeordnet ist, und einem Signalaufnehmermittel (14), das durch einen mit dem stillstehenden Ring verbundenen Aufnehmerträgerblock (15) gehalten und in Bezug auf das Signalgebermittel diesem gegenüber und mit geringem Abstand zu diesem angeordnet ist, wobei das Vorbeilaufen des Signalgebers während der Rotation durch das Signalaufnehmermittel erfasst wird, wobei der Aufnehmerträgerblock an dem stillstehenden Ring mittels eines metallenen Haltemittels (16) befestigt ist, das in Bezug auf den stillstehenden Ring positioniert ist, und das Haltemittel auf einer radial verlaufenden Stirnfläche (5) des stillstehenden Rings des Wälzlagers positioniert und in Radialrichtung bezüglich der Bohrung des Innenrings versetzt angeordnet ist, **dadurch gekennzeichnet, dass** das Haltemittel an der radial verlaufenden Stirnfläche angeschweißt und in Radialrichtung in Bezug auf die Außenumfangsfläche des Außenrings zurückversetzt angeordnet ist.

2. Wälzlager nach Anspruch 1, **dadurch gekennzeichnet, dass** das Haltemittel an dem Außenring des Wälzlagers angeschweißt ist.

3. Wälzlager nach Anspruch 2, **dadurch gekennzeichnet, dass** das Haltemittel in Bezug auf die Außenumfangsfläche des Außenrings des Wälzlagers positioniert ist.

4. Wälzlager nach Anspruch 1, **dadurch gekennzeichnet, dass** das Haltemittel an dem Innenring des Wälzlagers angeschweißt ist.

5. Wälzlager nach Anspruch 4, **dadurch gekennzeichnet, dass** das Haltemittel in Bezug auf die Bohrung des Innenrings des Wälzlagers positioniert ist.

6. Wälzlager nach einem der vorhergehenden Ansprüche, **dadurch gekennzeichnet, dass** das Haltemittel eine ringförmige Gestalt aufweist.

7. Wälzlager nach einem der Ansprüche 1 bis 5, **dadurch gekennzeichnet, dass** das Haltemittel die Form eines Ringausschnitts aufweist.

8. Wälzlager nach einem der vorhergehenden Ansprüche, **dadurch gekennzeichnet, dass** das Haltemittel mittels eines Elektronstrahls angeschweißt worden ist.

9. Wälzlager nach einem der Ansprüche 1 bis 7, **dadurch gekennzeichnet, dass** das Haltemittel mittels eines Laserstrahls angeschweißt worden ist.

## Claims

1. Rolling bearing comprising a stationary race (1), a rotating race (6), at least one row of rolling bodies (3) placed between the stationary race and the rotating race, an encoder means (23) secured to the rotating race and concentric therewith, and a sensor means (14) supported by a sensor carrier block (15) secured to the stationary race and arranged facing and a small gap away from the encoder means, the travel of which, during rotation, is detected by the sensor means, in which rolling bearing the sensor carrier block is secured to the stationary race by means of a metal retainer (16) positioned with respect to the stationary race, and the retainer is positioned on a radial face (5) of the stationary race of the rolling bearing and arranged radially set back from the bore of the inner race, **characterized in that** the retainer is welded to the said radial face and arranged radially set back from the periphery of the outer race.

2. Rolling bearing according to Claim 1, **characterized in that** the retainer is welded to the outer race of the rolling bearing.

3. Rolling bearing according to Claim 2, **characterized in that** the retainer is positioned with respect to the periphery of the outer race of the rolling bearing.

4. Rolling bearing according to Claim 1, **characterized in that** the retainer is welded to the inner race of the rolling bearing.

5. Rolling bearing according to Claim 4, **characterized in that** the retainer is positioned with respect to the bore of the inner race of the rolling bearing.

6. Rolling bearing according to any one of the preceding claims, **characterized in that** the retainer has an annular shape.

7. Rolling bearing according to any one of Claims 1 to 5, **characterized in that** the retainer has the shape of an angular sector.

8. Rolling bearing according to any one of the preceding claims, **characterized in that** the retainer is electron welded.

9. Rolling bearing according to any one of Claims 1 to 7, **characterized in that** the retainer is laser welded.
